# EUROPÄISCHE PATENTSCHRIFT

(11) **EP 2 478 967 B1**
(45) Veröffentlichungstag und Bekanntmachung des Hinweises auf die Patenterteilung: **22.03.2017**
(21) Anmeldenummer: 12151333.7
(22) Anmeldetag: 17.01.2012
(51) Int. Cl.: B05B 7/04, F16K 11/076, F16K 11/085, B05B 7/12

(54) **Ventil für eine Spritzpistole, Spritzpistole und Verfahren**
Valve for a spray gun, spray gun and method
Soupape pour un pistolet pulvérisateur, pistolet pulvérisateur et procédé

(30) Priorität: 19.01.2011 DE 102011002878
(43) Veröffentlichungstag der Anmeldung: 25.07.2012
(73) Patentinhaber: WIWA WILHELM WAGNER GMBH & CO. KG, D-35633 Lahnau (DE)
(72) Erfinder: Scherer, Dirk, D-35633 Lahnau (DE)
(74) Vertreter: advotec.

(56) Entgegenhaltungen:
- DE-U1- 20 104 036
- US-B2- 6 471 141

## Beschreibung

Die Erfindung betrifft ein Ventil für eine Spritzpistole mit den Merkmalen des Oberbegriffs des Anspruchs 1 und ein Verfahren zum Betrieb eines Ventils zum Zerstäuben fließfähiger Medien unter Verwendung von Druckluft mit den Merkmalen des Oberbegriffs des Anspruchs 15.

Derartige Ventile für Spritzpistolen sind regelmäßig aus einem Ventilgehäuse und einem im Ventilgehäuse angeordneten Ventilelement bzw. Ventilkolben gebildet. Im Ventilkolben befindet sich eine Längsbohrung, welche als eine Mischkammer dient. Weiter bilden im Ventilkolben Querbohrungen Zuführkanäle aus. Der Ventilkolben ist längsbeweglich im Ventilgehäuse gelagert und kann beispielsweise mittels eines weiteren, pneumatischen, doppelt wirkenden Kolbens in Längsrichtung vor- und zurückbewegt werden. Im Laufe der Bewegung des Ventilkolbens gelangt der bzw. die Zuführkanäle in einer Position in Überdeckung mit einer Materialzuführleitung, durch die ein unter Druck stehendes Spritzmedium in den Zuführkanal und nachfolgend in die Mischkammer gefördert wird. Eine weitergehende Bewegung des Ventilkolbens führt zu einem Verschluss des Zuführkanals durch beispielsweise das Ventilgehäuse und nachfolgend zu einer Freigabe des Zuführkanals in einer zweiten Position, so dass Druckluft in den Zuführkanal einströmen und das im Zuführkanal und in der Mischkammer befindliche Spritzmedium aus der Mischkammer herausfördern und in eine Umgebung zersträuben bzw. verspritzen kann. Beispielsweise können zwei Zuführkanäle vorgesehen sein, über die jeweils eine Komponente eines Zweikomponentenlacks zugeführt wird. Da eine alternierende Bewegung des Ventilkolbens mit vergleichsweise hoher Geschwindigkeit erfolgt, kann über das Ventil bzw. die betreffende Spritzpistole ein nahezu gleichmäßiger Austrag vom beispielsweise eines Lacks erfolgen.

Die vorbeschriebene Anordnung eines Ventilkolbens in einem Zylinder bzw. einem Ventilgehäuse sowie die Relativbewegung des Ventilkolbens entlang seiner Längsachse weist eine Reihe von Nachteilen auf. Da nicht nur der Ventilkolben bewegt werden muss, sondern auch ein Kolben eines Pneumatikzylinders zum Antrieb des Ventilkolbens, ist eine relativ große Masse zu bewegen, was zu einer unerwünschten Vibration einer Spritzpistole im Betrieb führt. Daneben bedarf es zahlreicher Dichtungen, zur Abdichtung des Ventilkolbens im Ventilgehäuse, wie auch im Bereich des Pneumatikzylinders. Die schnelle, lineare Bewegung des Ventilkolbens bewirkt einen frühzeitigen Verschleiß der Dichtungen und erfordert darüber hinaus eine ausreichende Schmierung. Weiter ist ein derartiges Ventil nur schlecht zu Reinigen, da der Ventilkolben fest mit seinem linearen Antrieb verbunden sein muss. Regelmäßig sind daher die bekannten Ventile zusammen mit einem Pneumatikzylinder als eine Spritzpistole ausgebildet, das heißt sie bilden eine gemeinsame Baueinheit durch Ausbildung eines gemeinsamen Gehäuses. Ein Auswechseln des Ventils ist somit nicht möglich bzw. ein Ausbau des Ventilkolbens zur Reinigung erfordert einen aufwendigen Montageaufwand.

Aus der DE 201 04 036 U1 ist eine Spritzpistole bekannt, welche ein Ventil zum Zerstäuben fließfähiger Medien aufweist. Das Ventil ist aus einem Ventilelement innerhalb eines Ventilgehäuses und einer Düsennadel gebildet. Eine Durchgangsbohrung in dem Ventilelement bildet eine Mischkammer aus, wobei die Düsennadel in der Mischkammer längsbeweglich angeordnet ist. Über zwei in die Mischkammer mündende Querbohrungen können zwei Komponenten eines Lacks der Mischkammer zugeführt werden. Durch ein Verschieben der Düsennadel in Längsrichtung kann die Mischkammer vollständig von der Düsennadel verschlossen oder zur Ausgabe der beiden Komponenten freigegeben werden.

Die US 6,471,141 B2 offenbart ein Ventil für ein Sprühgerät mit den Merkmalen des Oberbegriffs des Anspruchs 1 bzw. 15, insbesondere mit einem in einer Ventilgehäusevorrichtung drehbaren Ventilelement, das von einer ersten Position in eine zweite Position bewegt werden kann. Weiter sind in dem Ventilelement eine Mischkammer zum Austragen von zumindest einem Spritzmedium und ein Zuführkanal ausgebildet. Über eine weitere in die Mischkammer mündende, und an einen Schlauch angeschlossene Querbohrung wird hier Wasser der Mischkammer zugeführt.

Der vorliegenden Erfindung liegt daher die Aufgabe zugrunde, ein Ventil für eine Spritzpistole, das einfach aufgebaut und leicht handhabbar ist sowie ein Verfahren zum Betrieb eines derartigen Ventils vorzuschlagen.

Diese Aufgabe wird durch ein Ventil mit den Merkmalen des Anspruchs 1, eine Spritzpistole mit den Merkmalen des Anspruchs 10 und ein Verfahren mit den Merkmalen des Anspruchs 15 gelöst.

Das erfindungsgemäße Ventil für eine Spritzpistole zum Zerstäuben fließfähiger Medien unter Verwendung von Druckluft weist eine Ventilgehäusevorrichtung und ein Ventilelement auf, wobei das Ventilelement zumindest teilweise in der Ventilgehäusevorrichtung angeordnet ist, wobei im Ventilelement eine Mischkammer zum Mischen und Austragen von zumindest einem Spritzmedium mit Druckluft ausgebildet ist, wobei das Ventilelement und die Ventilgehäusevorrichtung so ausgebildet sind, dass das Ventilelement relativ zur Ventilgehäusevorrichtung von einer ersten Position in eine zweite Position bewegbar ist, und dass der Mischkammer in der ersten Position zumindest ein Spritzmedium und in der zweiten Position Druckluft über die Ventilgehäusevorrichtung zuführbar ist, wobei das Ventilelement von der ersten Position in die zweite Position drehbar an der Ventilgehäusevorrichtung angeordnet ist.

In Übereinstimmung mit dem zuvor beschriebenen Stand der Technik ist das erfindungsgemäße Ventil demnach so ausgebildet, dass das Ventilelement eine Drehbewegung ausführt. Dabei ist es grundsätzlich unerheblich, ob das Ventilelement eine vollständige und fortlaufende Umdrehung um 360° oder auch nur eine alternierende Drehung um wenige Winkelgrad ausführt. Durch alleine die Drehung des Ventilkolbens wird es möglich Vibrationen auf ein Minimum zu reduzieren bzw. bei einer fortlaufenden Drehung gänzlich auszuschließen. Dies wird insbesondere dadurch bewirkt, dass das Ventilelement um seine eigene Achse drehbar ist und somit nicht die gesamte Masse des Ventilelements in dem Maße beschleunigt werden muss, wie bei einer Längsbewegung. Auch wird es möglich, nur wenige Dichtungen zu verwenden und deren Verschleiß zu reduzieren, da die Dichtungen am Ventilelement nur in einer radialen Richtung entlang gleiten und nicht, wie bei einer Längsbewegung, entlang einer radialen Außenfläche des Ventilelements. Zur Übertragung einer Rotationsbewegung auf das Ventilelement von einem Antrieb ist es weiter nicht mehr erforderlich, dass das Ventilelement fest mit dem Antrieb gekoppelt ist. So kann das Ventilelement relativ zum Antrieb in Längsrichtung bewegbar sein, was eine vom Antrieb unabhängige Ausbildung des Ventils ermöglicht. Im Übrigen ist es mit einem derart ausgebildeten Ventil auch möglich mehrere Spritzmedien gleichzeitig zu mischen und auszutragen.

Erfindungsgemäß ist im Ventilelement zumindest ein Zuführkanal ausgebildet, der die Mischkammer mit einer radialen Außenfläche des Ventilelements verbindet. Der Zuführkanal dient so zur Zuführung eines Spritzmediums in die Mischkammer. Der Zuführkanal kann beispielsweise orthogonal zu einer Längsachse des Ventilelements oder auch schräg dazu im Ventilelement in Art einer Bohrung ausgebildet sein. Das Ventilelement selbst kann zylindrisch oder auch mit einer anderen Form, welche eine Drehung des Ventilelements ermöglicht, ausgebildet sein. Beispielsweise ist auch eine Kugel- oder Kegelform denkbar. Weiter können am Ventilelement in Längsrichtung Absätze oder Umfangsnuten sowie Vorsprünge ausgebildet sein, wenn diese eine Drehung nicht behindern. Grundsätzlich ist es sogar möglich, dass Ventilelement nicht rotationssymmetrisch auszubilden, wenn keine vollständige Drehung des Ventilelements in der Ventilgehäusevorrichtung vorgesehen ist.

Erfindungsgemäß weist die Ventilgehäusevorrichtung je Spritzmedium eine Zuführeinrichtung auf, die am Ventilelement dichtend anliegt, und über die dem Ventilelement in der ersten Position das Spritzmedium zuführbar ist. So kann das Ventilelement an der Zuführeinrichtung entlang gleiten, wobei die Zuführeinrichtung so ausgebildet sein kann, dass eine Reibung zwischen der Zuführeinrichtung und dem Ventilelement minimiert wird. Um einen Verschleiß des Ventilelements und/oder der Zuführeinrichtung möglichst gering zu halten, kann beispielsweise nitrierter Stahl als ein Werkstoff zur Ausbildung verwendet werden. Auch kann vorgesehen sein, dass für jedes zu verwendete Spritzmedium eine eigene Zuführeinrichtung verwendet wird, so dass eine Vermischung der Spritzmedien erst in der Mischkammer erfolgt. Alternativ ist es aber auch möglich, mehrere Spritzmedien mit alleine einer Zuführeinrichtung der Mischkammer zuzuführen. In diesem Fall kann die Zuführeinrichtung mehrere, voneinander getrennte Medienzuführleitungen bzw. -kanäle aufweisen.

Die Zuführeinrichtung kann als ein Dichtkolben mit einer koaxialen Medienzuführleitung ausgebildet sein, wobei die Medienzuführleitung in der ersten Position mit dem Zuführkanal des Ventilelements verbunden und in der zweiten Position durch die radiale Außenfläche des Ventilelements verschlossen sein kann. Der Dichtkolben kann beispielsweise mittels einer Spiralfeder gegen die radiale Außenfläche des Ventilelements gepresst werden, so dass eine besonders gute Dichtwirkung erzielt wird. Weiter kann der Dichtkolben an eine Form der radialen Außenfläche des Ventilelements zur Verbesserung der Dichtwirkung angepasst sein. In der ersten Position kann dann das Spritzmedium unter Druck durch die Medienzuführleitung in den Zuführkanal und die Mischkammer gefördert werden. Folglich kommt es in der ersten Position zu einer Überdeckung der Medienzuführleitung mit dem Zuführkanal. Eine Rotationsbewegung des Ventilelements relativ zum Dichtkolben bzw. der Medienzuführleitung bewirkt ein Absperren der Medienzuführleitung gegenüber dem Zuführkanal, dadurch dass die radiale Außenflächen des Ventilelements die Medienzuführleitung verschließt. Ein Verschließen der Medienzuführleitung kann bereits vor Erreichen der zweiten Position des Ventilelements erfolgen.

Zwischen der Ventilgehäusevorrichtung und dem Ventilelement kann eine mit Druckluft beaufschlagbare Druckluftkammer als eine Druckluftzuführleitung ausgebildet sein, wobei die Druckluftzuführleitung in der zweiten Position mit dem Zuführkanal des Ventilelements verbunden und in der ersten Position durch die radiale Außenfläche des Ventilelements verschlossen sein kann. Durch die Ausbildung einer Druckluftkammer, welche das Ventilelement umfänglich umgeben kann, wird eine Zuführung von Druckluft in die Mischkammer über den Zuführkanal erleichtert. Alternativ kann auch eine Druckluftzuführleitung ausgebildet sein, die in der zweiten Position unmittelbar mit dem Zuführkanal des Ventilelements in eine übereinstimmende Lage gelangt. Dringt nun Druckluft in den Zuführkanal und die Mischkammer ein, wird das darin befindliche Spritzmedium in einen Außenbereich gefördert und zerstäubt. Nachfolgend wird das Ventilelement wieder in die erste Position gedreht, um die Mischkammer mit dem Spritzmedium zu befüllen. Die Druckluftkammer bzw. die Druckluftzuführleitung ist dann gegenüber dem Zuführkanal abgesperrt.

Das Ventil kann beispielsweise zum Mischen und Zerstäuben eines Mehrkomponentenmaterials ausgebildet sein. Der Mischkammer kann dann in der ersten Position zumindest ein weiteres Spritzmedium über einen weiteren Zuführkanal zugeführt werden. Demnach kann für jedes weitere Spritzmedium jeweils ein Zuführkanal im Ventilelement ausgebildet sein. Das Ventil kann mit zwei Zuführkanälen für Zweikomponentenmaterialien, mit drei Zuführkanälen für Dreikomponentenmaterialen usw. ausgebildet sein. Eine Verwendung eines zusätzlichen Spritzmediums kann beispielsweise durch einen Austausch des Ventilelements und einem zusätzlichen Anschluss einer Medienzuführleitung an die Ventilgehäusevorrichtung bzw. das Ventilelement ohne ein Auswechseln des gesamten Ventils ermöglicht werden.

Sollen beispielsweise zwei Spritzmedien verwendet werden, können zwei Zuführeinrichtungen vorgesehen sein, die relativ zu einer Längsachse des Ventilelements einander gegenüberliegend angeordnet sind. So sind zwei gegenüberliegende Anschlüsse an der Ventilgehäusevorrichtung sowie Zuführkanäle am Ventilelement besonders einfach herzustellen. Auch kann so eine gleichmäßige Zuführung zweier Komponenten gewährleistet werden.

Demnach können auch die Zuführkanäle einander gegenüberliegend im Ventilelement ausgebildet sein, wobei die Zuführkanäle in einem an die Mischkammer grenzenden Mündungsabschnitt verjüngt ausgebildet sein können. Ein verjüngter Mündungsabschnitt kann eine Düse ausbilden, über die das jeweilige Spritzmedium in die Mischkammer so eingespritzt wird, dass es zu einer ausreichenden Vermischung mit dem weiteren Spritzmedium kommt. Wenn die Düsen in Art einer Bohrung ausgebildet sind, kann auch durch eine Variation eines Bohrungsdurchmessers die Düse bzw. der Mündungsabschnitt des Zuführkanals individuell an eine Viskosität des jeweiligen Spritzmediums angepasst werden. So kann sichergestellt werden, dass die Spritzmedien im gewünschten Mengenverhältnis in die Mischkammer gelangen.

Die Mischkammer ist besonders einfach ausbildbar, wenn diese rotationssymmetrisch, beispielsweise als eine Bohrung ausgebildet ist. Auch wird eine gute Verwirbelung bzw. Vermischung der Spritzmedien in der Mischkammer erzielt, wenn die Mündungsabschnitte jeweils relativ zu der Längsachse des Ventilelements und zueinander radial versetzt in der Mischkammer münden. Durch dieses außermittige Einspritzen der Spritzmedien in die Mischkammer wird eine Rotationsbewegung der Spritzmedien in der Mischkammer und damit eine gute Vermischung erreicht. Alternativ ist es auch möglich, die Zuführkanäle bzw. Mündungsabschnitte der jeweiligen Spritzmedien in Längsrichtung des Ventilelementes relativ zueinander versetzt im Ventilelement auszubilden. So kann besonderen Anforderungen an eine Vermischung bzw. einem Verhalten der Spritzmedien bei der Vermischung Rechnung getragen werden.

Das Ventil ist besonders einfach ausbildbar, wenn das Ventilelement um einen Winkel α von bis zu 90° um seine Längsachse drehbar ist. Eine Drehung von 90° oder weniger verursacht nur wenig Vibrationen und Reibung. Demnach kann in diesem Fall das Ventilelement alternierend von der ersten Position in die zweite Position und wieder zurück in die erste Position bewegt werden, ohne dass eine vollständige Drehung des Ventilelements ausgeführt wird. Je nach Ausbildung der Ventilgehäusevorrichtung kann das Ventilelement auch nur um wenige Winkelgrad drehbar sein.

Zumindest an Umkehrpunkten einer Drehung kann jeweils die erste Position bzw. die zweite Position erreicht sein. Das heißt, wenn keine vollständige Drehung des Ventilelements um 360° erfolgt, ist ein Anhalten des Ventilelements in den jeweiligen Umkehrpunkten mit einem Wechsel der Drehrichtung notwendig. Grundsätzlich kann dabei jedoch vorgesehen sein, dass die erste Position und/oder die zweite Position bereits vor Erreichen der jeweiligen Umkehrpunkte erreicht wird.

Die erfindungsgemäße Spritzpistole umfasst ein erfindungsgemäßes Ventil und eine Antriebsvorrichtung zum Antrieb des Ventils, wobei das Ventil mittels einer Antriebsverbindungseinrichtung mit der Antriebsvorrichtung lösbar verbunden ist. Da das Ventilelement keine Bewegung in Längsrichtung ausführt, bedarf es lediglich einer Kopplung der Antriebsvorrichtung mit dem Ventil durch die Antriebsverbindungseinrichtung zur Übertragung einer Rotationsbewegung. Dadurch wird es möglich, das Ventil so mit der Antriebsvorrichtung zu verbinden, dass das Ventil von der Antriebsvorrichtung und umgekehrt leicht lösbar ist, was eine Demontage des Ventils zu Wartungs- und Reinigungszwecken wesentlich vereinfacht. Die derart ausgebildete Spritzpistole kann demnach aus zwei voneinander unabhängigen Bauteilgruppen gebildet sein, was einen modularen Aufbau der Spritzpistole ermöglicht, was geringe Kosten für deren Herstellung zur Folge hat.

Besonders vorteilhaft ist es, wenn die Antriebsverbindungseinrichtung eine formschlüssige Steckverbindungseinrichtung zwischen dem Ventilelement und der Antriebsvorrichtung ausbildet. Eine formschlüssige Steckverbindungseinrichtung kann beispielsweise eine Vielkantsteckverbindungseinrichtung sein. In diesem Fall ist es lediglich erforderlich die Antriebsvorrichtung an das Ventil zu stecken und gegebenenfalls mit Schrauben zu sichern.

Vorteilhaft kann die Antriebsvorrichtung einen pneumatisch angetriebenen Aktor umfassen. Da ohnehin Druckluft zum Austreiben der Spritzmedien aus der Mischkammer zugeführt werden muss, kann beispielsweise der Aktor ebenfalls mit dieser Druckluft angetrieben werden.

Weiter kann die Antriebsvorrichtung einen rotatorischen Schwenkantrieb aufweisen. Ein Schwenkantrieb ist insbesondere dann besonders vorteilhaft, wenn keine vollständige Umdrehung des Ventilelements erforderlich ist. Weiter weist ein Schwenkantrieb geringe bewegte Massen auf, so dass Vibrationen durch die Antriebsvorrichtung vermieden werden können.

Des Weiteren können mittels einer Steuereinrichtung der Spritzpistole eine Verweilzeit des Ventilelements in der jeweiligen Position sowie eine Druckluftversorgung steuerbar sein. Hinsichtlich der Druckluftversorgung kann eine Versorgung der Antriebsvorrichtung der Druckluft und eine Versorgung des Ventils mit Druckluft unabhängig voneinander gesteuert werden, wobei eine funktionale Abstimmung der Antriebsvorrichtung im Ventil durch die Steuereinrichtung berücksichtigt werden kann. Zur Anpassung an verschiedene Viskositäten von Spritzmedien kann beispielsweise die Verweilzeit des Ventilelements in der ersten Position so gesteuert werden, dass die Mischkammer mit der erforderlichen Menge des Spritzmediums gefüllt wird. Weiter kann die Verweilzeit des Ventilelements in der zweiten Position so gewählt werden, dass ein vollständiges Ausblasen der Mischkammer mit Druckluft sichergestellt ist. Darüber hinaus kann die Steuereinrichtung sicherstellen, dass in einer Ruhestellung des Ventils bzw. der Antriebsvorrichtung ein Verschluss der Mischkammer gegenüber Spritzmedien und Druckluft in gegebenenfalls einer dritten Position bewirkt wird.

Das erfindungsgemäße Verfahren zum Betrieb eines Ventils für eine Spritzpistole zum Zerstäuben fließfähiger Medien unter Verwendung von Druckluft wird mit einem Ventil durchgeführt, wobei das Ventil eine Ventilgehäusevorrichtung und ein Ventilelement aufweist, wobei das Ventilelement zumindest teilweise in der Ventilgehäusevorrichtung angeordnet ist, wobei im Ventilelement eine Mischkammer zum Mischen und Austragen von zumindest einem Spritzmedium mit Druckluft ausgebildet ist, wobei das Ventilelement relativ zur Ventilgehäusevorrichtung von einer ersten Position in eine zweite Position bewegt wird, und wobei der Mischkammer in der ersten Position zumindest ein Spritzmedium und in der zweiten Position Druckluft über die Ventilgehäusevorrichtung zugeführt wird, wobei das Ventilelement von der ersten Position in die zweite Position gedreht wird, wobei im Ventilelement zumindest ein Zuführkanal ausgebildet ist, der die Mischkammer mit einer radialen Außenfläche des Ventilelements verbindet, wobei die Ventilgehäusevorrichtung je Spritzmedium eine Zuführeinrichtung aufweist, die am Ventilelement dichtend anliegt, und über die dem Ventilelement in der ersten Position das Spritzmedium zugeführt wird.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: Eine Längsschnittansicht einer Ausführungsform eines Ventils mit einer Antriebsvorrichtung;
- **Fig. 2**: eine Schnittansicht entlang einer Linie **II-II** aus **Fig. 1**;
- **Fig. 3**: eine Ausschnittsvergrößerung **III** aus **Fig. 2**;
- **Fig. 4**: eine Schnittansicht entlang einer Linie **IV-IV** aus **Fig. 1**.

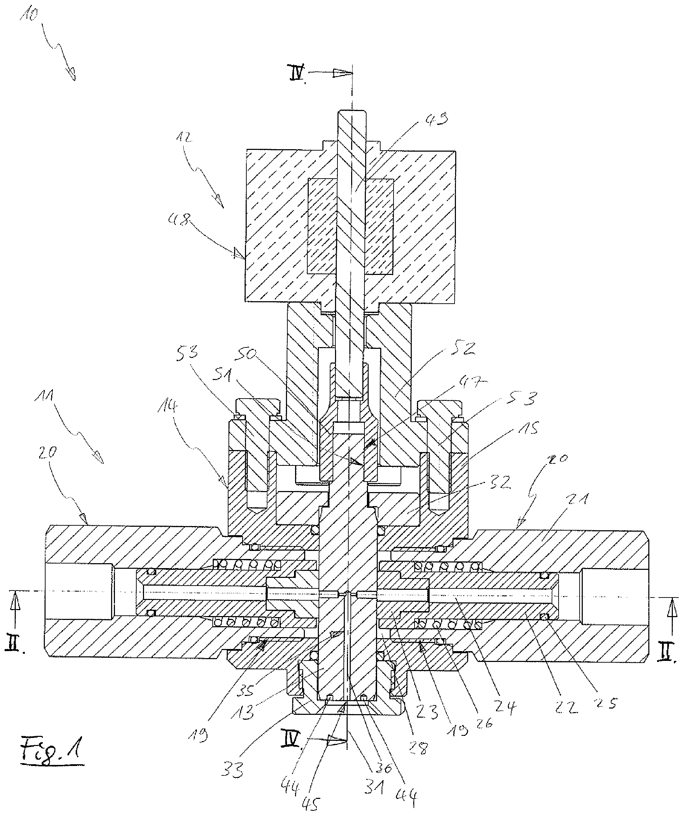

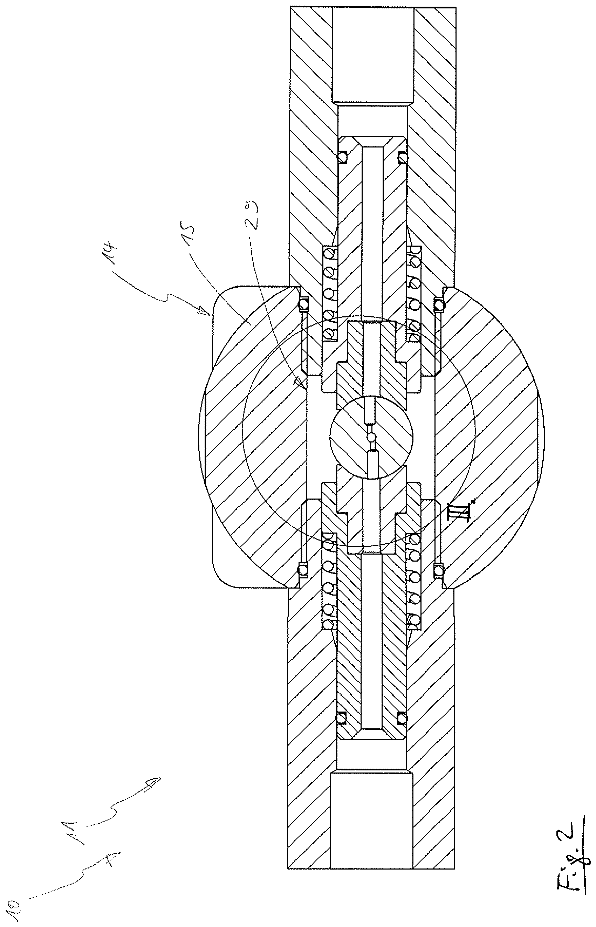

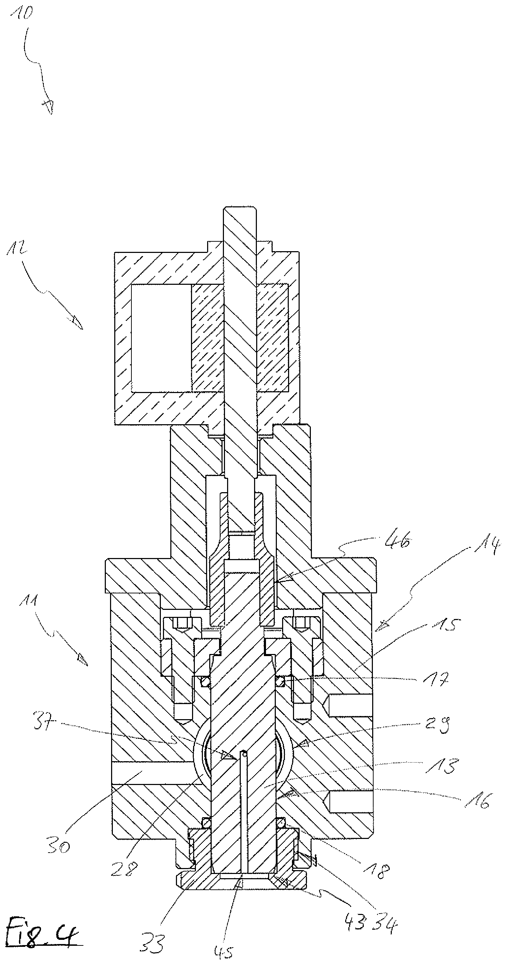

Eine Zusammenschau der **Fig. 1** bis **4** zeigt eine Ausführungsform einer hier nicht vollständig dargestellten Spritzpistole 10 mit einem Ventil 11 und einer Antriebsvorrichtung 12. Das Ventil 11 ist aus einem Ventilelement 13 mit einer Ventilgehäusevorrichtung 14 ausgebildet. Die Ventilgehäusevorrichtung 14 ist wiederum aus einem Ventilgehäusekörper 15 gebildet, der eine Führungseinrichtung 16 mit radialen Dichtungsringen 17 und 18 für eine Rotation des Ventilelements 13 ausbildet. Einander gegenüberliegend und fluchtend sind in dem Ventilgehäusekörper 15 jeweils Gewindebohrungen 19 ausgebildet, in die Zuführeinrichtungen 20 zur Zuführung von hier nicht dargestellten Spritzmedien eingeschraubt sind. Die Zuführeinrichtungen 20 sind jeweils aus einem Anschlusselement 21 zum Anschluss einer hier nicht gezeigten Druckleitung für das jeweilige Spritzmedium und einen Dichtkolben 22 mit einem Dichtelement 23 zur abdichtenden Anlage im Ventilelement 13 ausgebildet. Im Dichtkolben 22 bzw. im Dichtelement 23 ist eine Medienzuführleitung 24 ausgebildet. Der Dichtkolben 22 ist längsbeweglich im Anschlusselement 21 gelagert und mittels eines Dichtrings 25 gegenüber diesem abgedichtet. Eine Spiralfeder 26 erzeugt eine Andruckkraft, so dass das Dichtelement 23 unter Ausbildung einer Dichtfläche 27 an das Ventilelement 13 gepresst werden kann. Das Dichtelement 23 ist dabei insbesondere an eine Zylinderform des Ventilelements 13 angepasst.

Weiter ist im Ventilgehäusekörper eine Druckluftkammer 28 in Art einer Durchgangsbohrung 29 der Gewindebohrungen 19 ausgebildet, welche das Ventilelement 13 umfänglich umgibt. Die Druckluftkammer 28 kann über einen Kanal 30 in der Ventilgehäusevorrichtung 14 mit Druckluft versorgt werden. Um eine Bewegung des Ventilelements 13 in Richtung einer Längsachse 31 zu verhindern, ist weiter ein hinteres Gegenlager 32 und ein vorderes Gegenlager 33 am Ventilgehäusekörper 15 vorgesehen. Das vordere Gegenlager 33 ist in eine Gewindebohrung 34 im Ventilgehäusekörper 15 eingeschraubt und ermöglicht so ein leichtes Auswechseln des Ventilelements 13 durch einfache Demontage. Im Übrigen kann an das vordere Gegenlager 33 oder den Ventilgehäusekörper 15 eine hier nicht näher gezeigte Düse, beispielsweise zur Erzeugung eines Flachstrahls, gekoppelt sein.

Das Ventilelement 13 ist im Wesentlichen zylindrisch ausgebildet und weist eine Mischkammer 35 in Art einer konzentrischen Sacklochbohrung 36 auf. An einem oberen Ende 37 der Sacklochbohrung 36 münden jeweils Zuführkanäle 38 und 39 für verschiedene Spritzmedien in die Sacklochbohrung 36. Die Zuführkanäle 38 und 39 sind orthogonal zur Längsachse 31 ausgebildet und um ein Maß x relativ zu einer Längsachse 40 der Durchgangsbohrung 29 bzw. Längsachse 31 versetzt angeordnet. Weiter sind in den Zuführkanälen 38 und 39 jeweils Mündungsabschnitte 41 bzw. 42, welche die Zuführkanäle 38 bzw. 39 jeweils verjüngen, ausgebildet. Dadurch wird bewirkt, dass in die Mischkammer 35 unter Druck eingespritzte Spritzmedien in der Mischkammer 35 einen schraubenförmigen Wirbel ausbilden und sich so gut vermischen. Ein vorderes Ende 43 des Ventilelements 13 weist zwei Bohrungen 44 zum Ansatz eines hier nicht gezeigten Stiftschlüssels sowie eine Düsenöffnung 45 der Sacklochbohrung 36 auf, aus der die vermischten Spritzmedien zersträubt, unter Bildung eines Strahls austreten können. Ein oberes Ende 46 des Ventilelements 13 bildet einen Außenvierkant 47 zur Verbindung mit der Antriebsvorrichtung 12 aus. Die Antriebsvorrichtung 12 ist ein pneumatisch angetriebener Schwenkantrieb 48 mit einer Welle 49 und einem Kupplungsstück 50. Das Kupplungsstück 50 weist einen Innenvierkant 51 auf, welcher mit dem Außenvierkant 47 des Ventilelements 13 formschlüssig verbunden ist und einfach durch Auseinanderziehen getrennt werden kann. Weiter ist der Schwenkantrieb 48 über einen Flansch 57 und Schrauben 53 am Ventilgehäusekörper 15 befestigt.

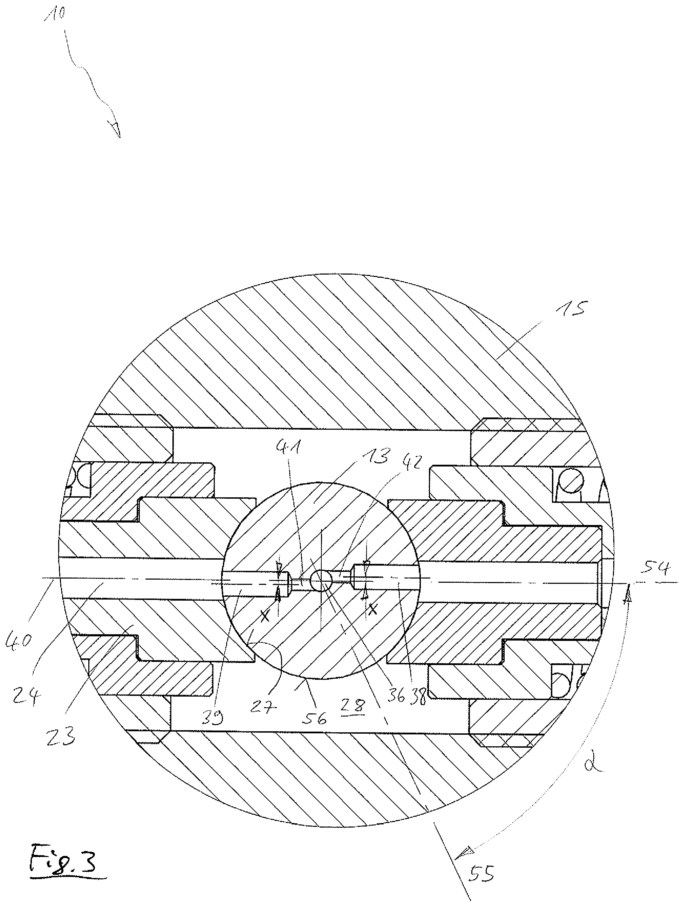

Wie **Fig. 3** zu entnehmen ist, ist das Ventilelement 13 in der gezeigten Darstellung in einer ersten Position 54 positioniert, derart, dass die Medienzuführleitungen 24 mit den Zuführkanälen 38 und 39 verbunden sind, so dass die jeweiligen Spritzmedien in die Mischkammer 35 eingebracht werden können. Das Ventilelement 13 ist um die Längsachse 31 um einen Winkel α in eine zweite Position 55, welche hier nicht zeichnerisch dargestellt und lediglich mit einer Strichpunktlinie angedeutet ist, drehbar, so dass die Zuführkanäle 38 und 39 mit der Druckluftkammer 28 verbunden sind. Die jeweiligen Medienzuführleitungen 24 werden dann von einer radialen Außenfläche 56 des Ventilelements 13 verschlossen. In der hier angedeuteten zweiten Position 55 kann so in der Druckluftkammer 28 unter Druck befindliche Druckluft in die Zuführkanäle 38 und 39 und nachfolgend in die Mischkammer 35 einströmen und die darin befindlichen Spritzmedien austreiben und zerstäuben. Danach wird das Ventilelement 13 wieder um den Winkel α von der zweiten Position 55 in die erste Position 54 gedreht, so dass die Mischkammer 35 erneut mit Spritzmedien befüllt werden kann.

## Patentansprüche

1. Ventil (11) für eine Spritzpistole (10) zum Zerstäuben fließfähiger Medien unter Verwendung von Druckluft, wobei das Ventil (11) eine Ventilgehäusevorrichtung (14) und ein Ventilelement (13) aufweist, wobei das Ventilelement (13) zumindest teilweise in der Ventilgehäusevorrichtung (14) angeordnet ist, wobei im Ventilelement (13) eine Mischkammer (35) zum Mischen und Austragen von zumindest einem Spritzmedium mit Druckluft ausgebildet ist, wobei das Ventilelement (13) und die Ventilgehäusevorrichtung (14) so ausgebildet sind, dass das Ventilelement (13) relativ zur Ventilgehäusevorrichtung (14) von einer ersten Position (54) in eine zweite Position (55) bewegbar ist, und dass der Mischkammer (35) in der ersten Position (54) zumindest ein Spritzmedium und in der zweiten Position (55) Druckluft über die Ventilgehäusevorrichtung (14) zuführbar ist, wobei das Ventilelement (13) von der ersten Position (54) in die zweite Position (55) drehbar an der Ventilgehäusevorrichtung (14) angeordnet ist,
wobei im Ventilelement (13) zumindest ein Zuführkanal (38, 39) ausgebildet ist, der die Mischkammer (35) mit einer radialen Außenfläche (56) des Ventilelements (13) verbindet,
**dadurch gekennzeichnet,**
**dass** die Ventilgehäusevorrichtung (14) je Spritzmedium eine Zuführeinrichtung (20) aufweist, die am Ventilelement (13) dichtend anliegt, und über die dem Ventilelement (13) in der ersten Position (54) das Spritzmedium zuführbar ist.

2. Ventil nach Anspruch 1,
**dadurch gekennzeichnet,**
**dass** die Zuführeinrichtung (20) als ein Dichtkolben (22) mit einer koaxialen Medienzuführleitung (24) ausgebildet ist, wobei die Medienzuführleitung (24) in der ersten Position (54) mit dem Zuführkanal (38; 39) des Ventilelements (13) verbunden und in der zweiten Position (55) durch die radiale Außenfläche (56) des Ventilelements (13) verschlossen ist.

3. Ventil nach Anspruch 1 oder 2,
**dadurch gekennzeichnet,**
**dass** zwischen der Ventilgehäusevorrichtung (14) und dem Ventilelement (13) eine mit Druckluft beaufschlagbare Druckluftkammer (28) als eine Druckluftzuführleitung ausgebildet ist, wobei die Druckluftzuführleitung in der zweiten Position (55) mit dem Zuführkanal (38; 39) des Ventilelements (13) verbunden und in der ersten Position (54) durch die radiale Außenfläche (56) des Ventilelements (13) verschlossen ist.

4. Ventil nach einem der vorangehenden Ansprüchen,
**dadurch gekennzeichnet,**
**dass** der Mischkammer (35) in der ersten Position (54) zumindest ein weiteres Spritzmedium über einen weiteren Zuführkanal (38; 39) zuführbar ist.

5. Ventil nach Anspruch 4,
**dadurch gekennzeichnet,**
**dass** zwei Zuführeinrichtungen (20) vorgesehen sind, die relativ zu einer Längsachse (31) des Ventilelements (13) einander gegenüberliegend angeordnet sind.

6. Ventil nach Anspruch 4 oder 5,
**dadurch gekennzeichnet,**
**dass** die Zuführkanäle (38, 39) einander gegenüberliegend im Ventilelement (13) ausgebildet sind, wobei die Zuführkanäle (38, 39) in einem an die Mischkammer (35) grenzenden Mündungsabschnitt (41, 42) verjüngt ausgebildet sind.

7. Ventil nach Anspruch 6,
**dadurch gekennzeichnet,**
**dass** die Mischkammer (35) rotationssymmetrisch ausgebildet ist, und die Mündungsabschnitte (41, 42) jeweils relativ zu der Längsachse (31) des Ventilelements (13) und zueinander radial versetzt in der Mischkammer (35) münden.

8. Ventil nach einem der vorangehenden Ansprüchen,
**dadurch gekennzeichnet,**
**dass** das Ventilelement (13) um einen Winkel α von bis zu 90° um seine Längsachse (31) drehbar ist.

9. Ventil nach einem der vorangehenden Ansprüchen,
**dadurch gekennzeichnet,**
**dass** zumindest an Umkehrpunkten einer Drehung jeweils die erste Position (54) bzw. die zweite Position (55) erreicht ist.

10. Spritzpistole (10) mit einem Ventil (11) nach einem der vorangehenden Ansprüchen und einer Antriebsvorrichtung (12) zum Antrieb des Ventils (11), wobei das Ventil (11) mittels einer Antriebsverbindungseinrichtung mit der Antriebsvorrichtung (12) lösbar verbunden ist.

11. Spritzpistole nach Anspruch 10,
**dadurch gekennzeichnet,**
**dass** die Antriebsverbindungseinrichtung eine formschlüssige Steckverbindungeinrichtung (47, 51) zwischen dem Ventilelement (13) und der Antriebsvorrichtung (12) ausbildet.

12. Spritzpistole nach Anspruch 10 oder 11,
**dadurch gekennzeichnet,**
**dass** die Antriebsvorrichtung (12) einen pneumatisch angetriebenen Aktor umfasst.

13. Spritzpistole nach einem der Ansprüche 10 bis 12,
**dadurch gekennzeichnet,**
**dass** die Antriebsvorrichtung (12) einen rotatorischen Schwenkantrieb (48) aufweist.

14. Spritzpistole nach einem der Ansprüche 10 bis 13,
**dadurch gekennzeichnet,**
**dass** mittels einer Steuereinrichtung der Spritzpistole (10) eine Verweilzeit des Ventilelements (13) in der jeweiligen Position (54, 55) sowie eine Druckluftversorgung steuerbar ist.

15. Verfahren zum Betrieb eines Ventils (11) für eine Spritzpistole (10) zum Zerstäuben fließfähiger Medien unter Verwendung von Druckluft, wobei das Ventil (11) eine Ventilgehäusevorrichtung (14) und ein Ventilelement (13) aufweist, wobei das Ventilelement (13) zumindest teilweise in der Ventilgehäusevorrichtung (14) angeordnet ist, wobei im Ventilelement (13) eine Mischkammer (35) zum Mischen und Austragen von zumindest einem Spritzmedium mit Druckluft ausgebildet ist, wobei das Ventilelement (13) relativ zur Ventilgehäusevorrichtung (14) von einer ersten Position (54) in eine zweite Position (55) bewegt wird, und wobei der Mischkammer (35) in der ersten Position (54) zumindest ein Spritzmedium über die Ventilgehäusevorrichtung (14) zugeführt wird, wobei das Ventilelement (13) von der ersten Position (54) in die zweite Position (55) gedreht wird, wobei im Ventilelement (13) zumindest ein Zuführkanal (38, 39) ausgebildet ist, der die Mischkammer (35) mit einer radialen Außenfläche (56) des Ventilelements (13) verbindet,
**dadurch gekennzeichnet,**
**dass** der Mischkammer (35) in der zweiten Position (55) Druckluft über die Ventilgehäusevorrichtung (14) zugeführt wird, wobei die Ventilgehäusevorrichtung (14) je Spritzmedium eine Zuführeinrichtung (20) aufweist, die am Ventilelement (13) dichtend anliegt, und über die dem Ventilelement (13) in der ersten Position (54) das Spritzmedium zugeführt wird.

## Claims

1. A valve (11) for a spray gun (10) for spraying free-flowing media with the use of compressed air, wherein the valve comprises a valve housing arrangement (14) and a valve element (13), wherein the valve element (13) is disposed at least partially in the valve housing arrangement (14), there being formed in the valve element (13) a mixing chamber (35) for mixing and discharging at least one spray medium with compressed air, wherein the valve element (13) and the valve housing arrangement (14) are constituted such that the valve element (13) can be moved relative to the valve housing arrangement (14) from a first position (54) into a second position (55), and that at least one spray medium can be fed to the mixing chamber (35) in the first position (54) and compressed air can be fed to the same via the valve housing arrangement (14) in the second position (55), wherein the valve element (13) is disposed on the valve housing arrangement (14) so as to be rotatable from the first position (54) into the second position (55), wherein there is formed in the valve element (13) at least one supply channel (38, 39) which connects the mixing chamber (35) to a radial outer surface (56) of the valve element (13),
**characterised in that**
the valve housing arrangement (14) comprises for each spray medium a supply device (20) which abuts against the valve element (13) in a sealing manner, and via which the spray medium can be fed to the valve element (13) in the first position (54).

2. The valve according to claim 1,
**characterised in that**
the supply device (20) is constituted as a sealing piston (22) with a coaxial media supply line (24), wherein the media supply line (24) is connected in the first position (54) to the supply channel (38; 39) of the valve element (13) and is closed in the second position (55) by the radial outer surface (56) of the valve element (13).

3. The valve according to any one of claims 1 or 2,
**characterised in that**
a compressed air chamber (28) pressurised with compressed air is constituted as a compressed air supply line between the valve housing arrangement (14) and the valve element (13), wherein the compressed air supply line is connected in the second position (55) to the supply channel (38; 39) of the valve element (13) and is closed in the first position (54) by the radial outer surface (56) of the valve element (13).

4. The valve according to any one of the preceding claims,
**characterised in that**
at least one further spray medium can be fed via a further supply channel (38; 39) to the mixing chamber (35) in the first position (54).

5. The valve according to claim 4,
**characterised in that**
two supply devices (20) are provided, which are disposed lying opposite one another relative to a longitudinal axis (31) of the valve element (13).

6. The valve according to claim 4 or 5,
**characterised in that**
the supply channels (38, 39) are formed lying opposite one another in the valve element (13), wherein the supply channels (38, 39) are constituted narrower in a mouth section (41, 42) adjacent to the mixing chamber (35).

7. The valve according to claim 6,
**characterised in that**
the mixing chamber (35) is constituted rotation-symmetrical, and the mouth sections (41, 42) emerge into the mixing chamber (35) in each case radially offset relative to the longitudinal axis (31) of the valve element (13) and to one another.

8. The valve according to any one of the preceding claims,
**characterised in that**
the valve element (13) can be rotated through an angle α of up to 90° about its longitudinal axis (31).

9. The valve according to any one of the preceding claims,
**characterised in that**
the first position (54) or the second position (55) is reached at least at reversal points of a rotation.

10. A spray gun (10) with a valve (11) according to any one of the preceding claims and a drive device (12) for driving the valve (11), wherein the valve (11) is connected detachably to the drive device (12) by means of a drive connection arrangement.

11. The spray gun according to claim 10,
**characterised in that**
the drive connection arrangement constitutes a form-fit plug-in connection arrangement (47, 51) between the valve element (13) and the drive device (12).

12. The spray gun according to claim 10 or 11,
**characterised in that**
the drive device (12) comprises a pneumatically driven actuator.

13. The spray gun according to any one of claims 10 to 12,
**characterised in that**
the drive device (12) comprises a rotary slewing drive (48).

14. The spray gun according to any one of claims 10 to 13,
**characterised in that**
a dwell time of the valve element (13) in the given position (54, 55) and a compressed air supply can be controlled by means of a control device of the spray gun (10).

15. A method for operating a valve (11) for a spray gun (10) for spraying free-flowing media with the use of compressed air, wherein the valve (11) comprises a valve housing arrangement (14) and a valve element (13), wherein the valve element is disposed at least partially in the valve housing arrangement (14), there being formed in the valve element (13) a mixing chamber (35) for mixing and discharging at least one spray medium with compressed air, wherein the valve element (13) is moved relative to the valve housing arrangement (14) from a first position (54) into a second position (55), and wherein at least one spray medium is fed to the mixing chamber (35) via the valve housing arrangement (14) in the first position (54), wherein the valve element (13) is rotated from the first position (54) into the second position (55), wherein there is formed in the valve element (13) at least one supply channel (38, 39) which connects the mixing chamber (35) to a radial outer surface (56) of the valve element (13),
**characterised in that**
compressed air is fed to the mixing chamber (35) via the valve housing arrangement (14) in the second position (55), wherein the valve housing arrangement (14) comprises for each spray medium a supply device (20) which abuts against the valve element (13) in a sealing manner, and via which the spray medium can be fed to the valve element (13) in the first position (54).

## Revendications

1. Soupape (11) pour un pistolet pulvérisateur (10) destiné à pulvériser des produits coulants en utilisant de l'air comprimé, la soupape (11) comprenant un dispositif de boîtier de soupape (14) et un élément de soupape (13), l'élément de soupape (13) étant disposé au moins en partie dans le dispositif de boîtier de soupape (14), une chambre de mélange (35) destinée à mélanger et distribuer au moins un produit à pulvériser à l'aide de l'air comprimé étant formée dans l'élément de soupape (13), l'élément de soupape (13) et le dispositif de boîtier de soupape (14) étant formés de telle manière que l'élément de soupape (13) peut être déplacé par rapport au dispositif de boîtier de soupape (14) depuis une première position (54) à une deuxième position (55) et que la chambre de mélange (35) peut être alimentée en au moins un produit à pulvériser dans la première position (54) et peut être alimentée en air comprimé à travers le dispositif de boîtier de soupape (14) dans la deuxième position (55), l'élément de soupape (13) étant disposé sur le dispositif de boîtier de soupape (14) de telle manière qu'il peut être tourné depuis la première position (54) à la deuxième position (55), au moins un canal d'alimentation (38, 39) étant formé dans l'élément de soupape (13), le canal d'alimentation (38, 39) reliant la chambre de mélange (35) avec une surface extérieure (56) radiale de l'élément de soupape (13),
**caractérisée en ce que**
le dispositif de boîtier de soupape (14) comprend un dispositif d'alimentation (20) pour chaque produit à pulvériser, ledit dispositif d'alimentation (20) étant en contact étanche avec l'élément de soupape (13), et l'élément de soupape (13) pouvant être alimenté en produit à pulvériser par ledit dispositif d'alimentation (20) dans la première position (54).

2. Soupape selon la revendication 1,
**caractérisée en ce que**
le dispositif d'alimentation (20) est formé comme piston d'étanchéité (22) comprenant une ligne d'alimentation en produits (24) coaxiale, la ligne d'alimentation en produits (24) étant reliée avec le canal d'alimentation (38; 39) de l'élément de soupape (13) dans la première position (54) et étant fermée dans la deuxième position (55) par la surface extérieure (56) radiale de l'élément de soupape (13).

3. Soupape selon la revendication 1 ou 2,
**caractérisée en ce qu'**
une chambre à air comprimé (28) qui peut être pressurisée avec de l'air comprimé est formée comme ligne d'alimentation en air comprimé entre le dispositif de boîtier de soupape (14) et l'élément de soupape (13), la ligne d'alimentation en air comprimé étant reliée avec le canal d'alimentation (38; 39) de l'élément de soupape (13) dans la deuxième position (55) et étant fermée dans la première position (54) par la surface extérieure (56) radiale de l'élément de soupape (13).

4. Soupape selon l'une quelconque des revendications précédentes,
**caractérisée en ce que**
la chambre de mélange (35) peut être alimentée en au moins un autre produit à pulvériser par un autre canal d'alimentation (38; 39) dans la première position (54).

5. Soupape selon la revendication 4,
**caractérisée en ce que**
deux dispositifs d'alimentation (20) sont prévus, qui sont disposés de manière opposée l'un à l'autre par rapport à un axe longitudinal (31) de l'élément de soupape (13).

6. Soupape selon la revendication 4 ou 5,
**caractérisée en ce que**
les canaux d'alimentation (38, 39) sont formés de manière opposée l'un à l'autre dans l'élément de soupape (13), les canaux d'alimentation (38, 39) s'effilant dans une partie d'embouchure (41, 42) adjacente à la chambre de mélange (35).

7. Soupape selon la revendication 6,
**caractérisée en ce que**
la chambre de mélange (35) présente une symétrie de révolution et les parties d'embouchure (41, 42) débouchent chacune dans la chambre de mélange (35) en quinconce radial par rapport à l'axe longitudinal (31) de l'élément de soupape (13) et l'une par rapport à l'autre.

8. Soupape selon l'une quelconque des revendications précédentes,
**caractérisée en ce que**
l'élément de soupape (13) peut être tourné d'un angle α allant jusqu'à 90° atour de son axe longitudinal (31).

9. Soupape selon l'une quelconque des revendications précédentes,
**caractérisée en ce que**
la première position (54) et la deuxième position (55) sont atteintes, respectivement, au moins à des points de retour d'une rotation.

10. Pistolet pulvérisateur (10) comprenant une soupape (11) selon l'une quelconque des revendications précédentes et un dispositif d'entraînement (12) destiné à entraîner la soupape (11), la soupape (11) étant reliée de manière détachable avec le dispositif d'entraînement (12) par un moyen de liaison d'entraînement.

11. Pistolet pulvérisateur selon la revendication 10,
**caractérisé en ce que**
le moyen de liaison d'entraînement forme un moyen de liaison enfichable (47, 51) par forme entre l'élément de soupape (13) et le dispositif d'entraînement (12).

12. Pistolet pulvérisateur selon la revendication 10 ou 11,
**caractérisé en ce que**
le dispositif d'entraînement (12) comprend un actionneur à entraînement pneumatique.

13. Pistolet pulvérisateur selon l'une quelconque des revendications 10 à 12,
**caractérisé en ce que**
le dispositif d'entraînement (12) comprend un entraînement pivotant rotatif (48).

14. Pistolet pulvérisateur selon l'une quelconque des revendications 10 à 13,
**caractérisé en ce qu'**
un temps de séjour de l'élément de soupape (13) dans la position (54, 55) respective et une alimentation en air comprimé peuvent être commandés à l'aide d'un moyen de commande du pistolet pulvérisateur (10).

15. Procédé d'exploitation d'une soupape (11) pour un pistolet pulvérisateur (10) destiné à pulvériser des produits coulants en utilisant de l'air comprimé, la soupape (11) comprenant un dispositif de boîtier de soupape (14) et un élément de soupape (13), l'élément de soupape étant disposé au moins en partie dans le dispositif de boîtier de soupape (14), une chambre de mélange (35) destinée à mélanger et distribuer au moins un produit à pulvériser à l'aide de l'air comprimé étant formée dans l'élément de soupape (13), l'élément de soupape (13) étant déplacé par rapport au dispositif de boîtier de soupape (14) depuis une première position (54) à une deuxième position (55) et la chambre de mélange (35) étant alimentée en au moins un produit à pulvériser dans la première position (54) à travers le dispositif de boîtier de soupape (14), l'élément de soupape (13) étant tourné depuis la première position (54) à la deuxième position (55), au moins un canal d'alimentation (38, 39) étant formé dans l'élément de soupape (13), le canal d'alimentation (38, 39) reliant la chambre de mélange (35) avec une surface extérieure (56) radiale de l'élément de soupape (13),
**caractérisé en ce que**
la chambre de mélange (35) est alimentée en air comprimé dans la deuxième position (55) à travers le dispositif de boîtier de soupape (14), le dispositif de boîtier de soupape (14) comprenant un dispositif d'alimentation (20) pour chaque produit à pulvériser, ledit dispositif d'alimentation (20) étant en contact étanche avec l'élément de soupape (13), et l'élément de soupape (13) étant alimenté en produit à pulvériser par ledit dispositif d'alimentation (20) dans la première position (54).
